# EUROPÄISCHE PATENTSCHRIFT

(11) **EP 1 500 254 B1**
(45) Veröffentlichungstag und Bekanntmachung des Hinweises auf die Patenterteilung: **25.12.2013**
(21) Anmeldenummer: 03708192.4
(22) Anmeldetag: 07.03.2003
(51) Int. Cl.: H04M 9/08

(54) **KOMMUNIKATIONSEINRICHTUNG ZUR ÜBERTRAGUNG AKUSTISCHER SIGNALE IN EINEM KRAFTFAHRZEUG**
COMMUNICATIONS DEVICE FOR TRANSMITTING ACOUSTIC SIGNALS IN A MOTOR VEHICLE
DISPOSITIF DE COMMUNICATION DESTINE A LA TRANSMISSION DE SIGNAUX ACOUSTIQUES DANS UN VEHICULE

(30) Priorität: 18.04.2002 DE 10217778
(43) Veröffentlichungstag der Anmeldung: 26.01.2005
(73) Patentinhaber: Volkswagen Aktiengesellschaft, 38440 Wolfsburg (DE)
(72) Erfinder: SCHULTZ, Jürgen, 38165 Lehre (DE); SCHÖNING, Volkmar, 30900 Wedemark (DE); BÖHM, Tobias, 38464 Gross Twülpstedt (DE); MATULOVIC, Stefan, 38471 Rühen (DE)
(74) Vertreter: Zucker, Volker
(86) Internationale Anmeldenummer: PCT/EP2003/002368
(87) Internationale Veröffentlichungsnummer: WO 2003/088637

(56) Entgegenhaltungen:
- EP-A- 0 304 257
- EP-A- 0 903 726
- DE-A- 19 827 134
- US-A- 4 449 238
- US-A- 5 185 803

## Beschreibung

Die Erfindung betrifft eine Kommunikationseinrichtung zur Übertragung akustischer Signale in einem Kraftfahrzeug.

Derartige Vorrichtungen, beispielsweise DVE (Digital Voice Enhancement) - Systeme haben die Aufgabe, die akustische Kommunikation zwischen Nutzern oder Nutzer mit einer akustischen Schnittstelle, wie beispielsweise einem Spracherkennungssystem oder einer Freisprechanlage in einem Raum zu verbessern. Neben Motor- und Windgeräuschen kann die Kommunikation durch eine zu starke Dämpfung einzelner akustischer Raumübertragungsstrecken behindert werden. Hierzu umfassen die Vorrichtungen verschiedene Mikrofone und Lautsprecher, die bestimmten Raumpositionen zugeordnet sind. Anstelle von Einzel-Mikrofonen sind auch Mikrofonarrays bekannt, deren Mikrofone dann auf die jeweiligen Raumpositionen ausgerichtet werden.

Aus der DE 199 38 158 C1 ist eine Vorrichtung zur Kompensation von Verlusten eines akustischen Signals auf einem Übertragungsweg zwischen mindestens einem Sendeort und mindestens einem Empfangsort in einem Raum bekannt, wobei eine Steuereinheit zur Bestimmung des Übertragungsweges sowie zur Ermittlung mindestens eines Parameters einer zugehörigen Übertragungsfunktion vorgesehen ist, und wobei die Steuereinheit mit mindestens einer Pegelwaage verbunden ist, die in Kombination mit mindestens einem Echokompensator zwischen dem Sendeort und dem Empfangsort zur Steuerung des akustischen Signalpegels für eine vorgebbare Position im Übertragungsweg angeordnet ist. Dabei wird mittels der Steuereinheit das Mikrofon bestimmt, das den höchsten Signalpegel aufweist. Dieses Mikrofon stellt das jeweils aktive Mikrofon dar. Dessen zugeordneter Lautsprecher wird deaktiviert. Weiter wird vorgeschlagen, die elektrischen Signale vom aktiven Mikrofon an die aktiven Lautsprecher zeitlich zu verzögern, so dass diese synchron zur akustischen Signalstrecke sind. Des weiteren sollen diese je nach Position der Lautsprecher gedämpft werden, so dass die Summe von akustischen und elektrischen Signalen an den jeweiligen Raumpositionen eine vorgegebene Lautstärke ergeben.

Der Erfindung liegt das technische Problem zugrunde, eine Kommunikationseinrichtung zur Übertragung akustischer Signale zu schaffen, wo bestimmte störende akustische Signale besser unterdrückt werden.

Die Lösung des technischen Problems ergibt sich durch die Gegenstände mit den Merkmalen des Patentanspruchs 1. Weitere vorteilhafte Ausgestaltungen der Erfindung ergeben sich aus den Unteransprüchen.

Hierzu ist der Steuereinheit mindestens ein Bedienelement zugeordnet, mittels dessen selektiv mindestens ein Sendemittel unabhängig vom anliegenden Signalpegel deaktivierbar ist. Dabei geht die Erfindung von der Erkenntnis aus, dass beispielsweise schreiende Kinder die Kommunikation zwischen den Fahrzeuginsassen bzw. zwischen einem Fahrzeuginsassen und einem Endgerät erheblich beeinträchtigen. Bei Ausführungsformen, wo jeweils alle Sendemittel aktiv sind, werden diese Geräusche mitübertragen und stören die akustische Wahmehmbarkeit der anderen Fahrzeuginsassen. Bei Ausführungsformen, wo jeweils nur das Sendemittel des lautesten Fahrzeuginsassen aktiv ist, kann dies sogar dazu führen, dass nur noch das Kindergeschrei übertragen wird. Erfindungsgemäß besteht nun die Möglichkeit, selektiv das zugehörige Sendemittel zu deaktivieren, so dass von dieser Raumposition keine akustischen Signale mehr über die Kommunikationseinrichtung übertragen werden. Des weiteren ist es auch möglich, die Signalpegel zur Auswahl des aktiven Sendemittels zu wichten, beispielsweise um das sehr laute bzw. sehr leise Sprechen eines Fahrzeuginsassen zu kompensieren, sodass gegebenenfalls auf eine völlige Deaktivierung verzichtet werden kann. Wird dann beispielsweise dem Signalpegel des dem Kleinkind zugeordneten Sendemittel ein Wichtungsfaktor 0,1 zugeordnet, so wird dessen Sendemittel nur aktiviert, wenn der um 1/10 gedämpfte Signalpegel noch immer der größte Signalpegel ist. Vorzugsweise erfolgt dann die Übertragung an die Empfangsmittel unter Berücksichtigung der Wichtungsfaktoren, sodass die Signale von sehr laut sprechenden Personen gedämpft und von sehr leise sprechenden Personen verstärkt werden. Die Wichtung der Signalpegel kann dabei sowohl bei Ausführungsformen erfolgen, wo jeweils nur das Sendemittel mit dem höchsten Signalpegel aktiviert wird, als auch bei Ausführungsformen wo jeweils alle Sendemittel aktiv.

In einer weiteren bevorzugten Ausführungsform können auch einzelne Empfangsmittel selektiv, unabhängig von den an den zugehörigen Sendemitteln anliegenden Signalpegeln deaktiviert werden. Somit kann beispielsweise ein Sitzplatz aus der Kommunikationseinrichtung vollständig entbunden werden, sodass beispielsweise ein schlafender Beifahrer nicht gestört wird.

Die Sendemittel sind vorzugsweise als Mikrofone und/oder als Mikrofonarray ausgebildet, wobei die Empfangsmittel vorzugsweise als Lautsprecher ausgebildet sind.

In einer weiteren bevorzugten Ausführungsform wird jeweils nur das Sendemittel bzw. Mikrofon mit dem höchsten Signalpegel aktiviert, wobei das jeweils zugeordnete Empfangsmittel des aktiven Sendemittels deaktiviert wird, um Rückkopplungen bzw. Echos zu minimieren.

In einer weiteren bevorzugten Ausführungsform sind zwischen den Sende- und Empfangsmitteln Verzögerungsglieder zur Kompensation der Laufzeitunterschiede angeordnet, um das akustische Signal am Empfangsmittel synchron zur akustischen Raumwelle abzustrahlen. Die Laufzeiten können dabei vorab bestimmt werden und als a priori Informationen in der Steuereinheit abgelegt werden.

In einer weiteren bevorzugten Ausführungsform sind zwischen den Sende- und Empfangsmifteln Echokompensatoren angeordnet, wobei beispielsweise eine Anordnung gemäß der DE 199 38 158 C1 zurückgegriffen werden kann.

Zum Ausgleich der unterschiedlichen Dämpfungen zwischen den verschiedenen Sitzplätzen in einem Kraftfahrzeug sowie der unterschiedlichen Dämpfungen in Abhängigkeit von der Übertragungsrichtung sind zwischen den Sende- und Empfangsmitteln vorzugsweise Dämpfungseinheiten angeordnet, sodass die über die Empfangseinheiten abgestrahlten Signalpegel derart anpassbar sind, sodass die Überlagerung mit der akustischen Raumwelle einen konstanten Signalpegel ergibt.

Die Ausbildung des Bedienelementes kann dabei sehr unterschiedlich sein. Beispielsweise kann jedem Sende- und Empfangsmittel ein Taster oder Schalter zugeordnet sein, mittels dessen das Sende- und/oder Empfangsmittel deaktivierbar ist bzw. weiter in die Kommunikationseinrichtung einbindbar ist. Zur Einsparung an Bedienelementen kann dabei jeweils einem Sitzplatz ein Bedienelement zugeordnet werden, mittels dessen alle dem Sitzplatz zugeordneten Sende- und Empfangsmittel deaktiviert werden können. Zur Einsparung von separaten Bedienelementen für die verschiedenen Sitzplätze kann auch ein Dreh-Drück-Geber Anwendung finden, dem beispielsweise ein Display oder eine LED-Anzeige zugeordnet ist, sodass über die Drehung der Sitzplätze ausgewählt werden kann, dessen Sende- und/oder Empfangsmittel dann durch Drücken deaktivierbar bzw. wieder einbindbar sind.

In einer weiteren bevorzugten Ausführungsform erfolgt die Bedienung der Kommunikationseinrichtung über eine Multifunktionsbedieneinrichtung, wo ein entsprechendes Menü dann darstellbar ist und über die ohnehin vorhandenen Bedienelemente der Multifunktionsbedieneinrichtung die Deaktivierung bzw. wieder Einbindung der Sende- und/oder Empfangsmittel erfolgt. Dabei kann das Bedienelement je nach Ausführung der Multifunktionsbedieneinrichtung als Dreh-Drück-Geber, als Wippschalter, Taster oder als Softkey ausgebildet sein.

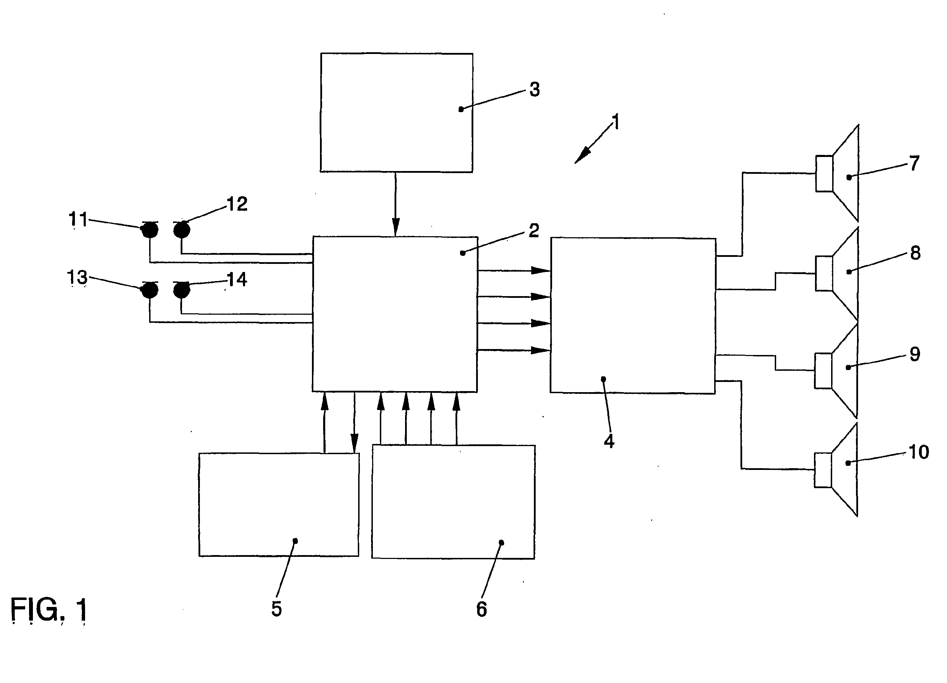

Die einzige Figur zeigt ein schematisches Blockschaltbild einer Kommunikationseinrichtung in einem Kraftfahrzeug.

Die Kommunikationseinrichtung 1 umfasst eine Steuereinheit 2, ein Bedienelement 3, einen Verstärker 4, eine mit einer Freisprechanlage ausgebildete Telefonanlage 5, ein Radio 6, vier Lautsprecher 7 - 10 sowie vier Mikrofone 11 - 14, die jeweils einem Sitzplatz im Kraftfahrzeug zugeordnet sind. Die Lautsprecher 7 - 10 sind beispielsweise links und rechts vorne und hinten im Kraftfahrzeug angeordnet und werden über den Verstärker 4 von der Steuereinheit 2 angesteuert, wobei über die Lautsprecher 7 - 10 sowohl die Signale des Radios 6 als auch der Telefonanlage 5 ausgestrahlt werden können. Die Mikrofone 11 - 14 sind verschiedenen Sitzplätzen im Kraftfahrzeug zugeordnet, wobei beispielsweise das Mikrofon 11 dem Fahrer, das Mikrofon 12 dem Beifahrer und die Mikrofone 13, 14 der Rückbank (links und rechts) zugeordnet sind. Über die Mikrofone 11 - 14 kann dann ein akustisches Signal eines Fahrzeuginsassen aufgenommen und an die Steuereinheit 2 übertragen werden, wo dieses dann über den Verstärker 4 über die Lautsprecher 7 - 10 abgegeben werden kann. Hierdurch kann eine Kommunikation zwischen den Fahrzeuginsassen bzw. zwischen einem Fahrzeuginsassen und einem Endgerät, wie beispielsweise der Telefonanlage 5, verbessert werden, die ansonsten durch Fahrzeuggeräusche oder durch Dämpfung beeinträchtigt wäre. Mittels einer derartigen Kommunikationseinrichtung 1 wird somit sowohl die Kommunikation zwischen den Fahrzeuginsassen vorne und hinten im Kraftfahrzeug verbessert, als auch die Nutzung von Freisprechanlagen, insbesondere durch die auf der Rückbank sitzenden Fahrzeuginsassen, ermöglicht. Hierzu erfasst die Steuereinheit 2 oder eine ihr zugeordnete Messeinrichtung das Mikrofon bzw. die Ausrichtung des Mikrofonarrays, an dem aktuell der größte Signalpegel anliegt. Dabei kann zur Bestimmung des Signalpegels auch nur ein bestimmter Frequenzbereich verwendet werden. Dabei wird davon ausgegangen, dass der zugeordnete Fahrzeuginsasse spricht, so dass dessen Signale über die Lautsprecher 7 - 10 ausgegeben werden, wohingegen die Signale der anderen Mikrofone unterdrückt werden Um Echos zu vermeiden, wird dann der dem Sitzplatz zugeordnete Lautsprecher 7 - 10 für das Sprachsignal deaktiviert, so dass der Fahrzeuginsasse nicht aus dem Lautsprecher seine eigene Stimme hört, wohingegen gleichzeitig übertragene Musik vom Radio 6 weiter abgestrahlt wird.

Mittels des Bedienelementes 3, das vorzugsweise dem Fahrer zugeordnet ist, können nun einzelne Mikrofone 11 - 14 oder Gruppen von Mikrofonen deaktiviert werden. Ebenso können einzelne Lautsprecher 7 - 10 deaktiviert werden. Hierdurch können einzelne Sitzplätze selektiv aus der Kommunikationseinrichtung 1 entbunden werden, deren über die Mikrofone übertragenen Signale ansonsten die Kommunikation behindern oder erschweren würden, wie beispielsweise schreiende Kinder, deren zugeordnetes Mikrofon ansonsten bei ausreichender Lautstärke stets aktiv geschaltet wäre.

## Patentansprüche

1. Kommunikationseinrichtung zur Übertragung akustischer Signale in einem Kraftfahrzeug, umfassend mindestens zwei Sendemittel und mindestens zwei Empfangsmittel zur Übertragung und Abstrahlung akustischer Signale, wobei jeweils mindestens ein Sende- und ein Empfangsmittel einer Raumposition zugeordnet sind, und eine Steuereinheit zum Aktivieren bzw. Deaktivieren mindestens der Sendemittel,
**dadurch gekennzeichnet, dass**
mittels der Steuereinheit (2) die Signalpegel an den Sendemitteln erfassbar sind und jeweils nur das Sendemittel mit dem höchsten Signalpegel aktiviert ist,
wobei der Steuereinheit (2) mindestens ein Bedienelement (3) zugeordnet ist, mittels dessen die Signalpegel mindestens eines Sendemittels gewichtet werden, wobei der gewichtete Signalpegel bei der Ermittlung des höchsten Signalpegels herangezogen wird, wobei mittels des Bedienelementes selektiv mindestens ein Sendemittel unabhängig vom anliegenden Signalpegel deaktivierbar ist.

2. Kommunikationseinrichtung nach Anspruch 1, **dadurch gekennzeichnet, dass** mittels des Bedienelementes (3) mindestens ein Empfangsmittel unabhängig von den Signalpegeln deaktivierbar ist.

3. Kommunikationseinrichtung nach Anspruch einem der Ansprüche 1 oder 2, **dadurch gekennzeichnet, dass** die Sendemittel als Mikrofone (11 - 14) und/oder als Mikrofonarray ausgebildet sind.

4. Kommunikationseinrichtung nach einem der Ansprüche 1 bis 3, **dadurch gekennzeichnet, dass** die Empfangsmittel als Lautsprecher (7 - 10) ausgebildet sind.

5. Kommunikationseinrichtung nach einem der Ansprüche 1 bis 4, **dadurch gekennzeichnet, dass** jeweils das zugeordnete Empfangsmittel des aktiven Sendemittels durch die Steuereinheit (2) deaktivierbar oder im Pegel reduzierbar ist.

6. Kommunikationseinrichtung nach einem der vorangegangenen Ansprüche, **dadurch gekennzeichnet, dass** zwischen den Sendemitteln und den Empfangsmitteln Verzögerungsglieder zur Kompensation der Laufzeitunterschiede angeordnet sind.

7. Kommunikationseinrichtung nach einem der vorangegangenen Ansprüche, **dadurch gekennzeichnet, dass** zwischen den Sende- und den Empfangsmitteln Echokompensatoren angeordnet sind.

8. Kommunikationseinrichtung nach einem der vorangegangenen Ansprüche, **dadurch gekennzeichnet, dass** zwischen den Sende- und Empfangseinheiten Dämpfungseinheiten angeordnet sind.

9. Kommunikationseinrichtung nach einem der vorangegangenen Ansprüche, **dadurch gekennzeichnet, dass** das Bedienelement (3) als Taster, Schalter und/oder Dreh-Drück-Geber ausgebildet ist.

10. Kommunikationseinrichtung nach einem der vorangegangenen Ansprüche, **dadurch gekennzeichnet, dass** die Position der Sende- und Empfangsmittel auf einer Multifunktionsbedieneinheit darstellbar ist, wobei das Bedienelement (3) der Multifunktionsbedieneinheit zugeordnet ist.

## Claims

1. Communication device for transmitting audible signals in a motor vehicle, comprising at least two transmission means and at least two reception means for transmitting and radiating audible signals, wherein at least one transmission means and one reception means are respectively associated with a spatial position, and a control unit for activating and deactivating at least the transmission means,
**characterized in that**
the control unit (2) can be used to detect the signal levels at the transmission means, and only the transmission means with the highest signal level is activated in each case,
wherein the control unit (2) has at least one associated operator control element (3) that is used to weight the signal levels of at least one transmission means, wherein the weighted signal level is used for ascertaining the highest signal level, wherein the operator control element can be used to selectively deactivate at least one transmission means independently of the applied signal level.

2. Communication device according to Claim 1, **characterized in that** the operator control element (3) can be used to deactivate at least one reception means independently of the signal levels.

3. Communication device according to either of Claims 1 and 2, **characterized in that** the transmission means are in the form of microphones (11-14) and/or in the form of a microphone array.

4. Communication device according to one of Claims 1 to 3, **characterized in that** the reception means are in the form of loudspeakers (7-10).

5. Communication device according to one of Claims 1 to 4, **characterized in that** the associated reception means of the active transmission means can be deactivated or have its level reduced by the control unit (2) in each case.

6. Communication device according to one of the preceding claims, **characterized in that** delay elements for compensating for the propagation time differences are arranged between the transmission means and the reception means.

7. Communication device according to one of the preceding claims, **characterized in that** echo compensators are arranged between the transmission means and the reception means.

8. Communication device according to one of the preceding claims, **characterized in that** damping units are arranged between the transmission units and the reception units.

9. Communication device according to one of the preceding claims, **characterized in that** the operator control element (3) is in the form of a pushbutton switch, switch and/or rotation/pressure sensor.

10. Communication device according to one of the preceding claims, **characterized in that** the position of the transmission and reception means can be presented on a multifunctional operator control unit, wherein the operator control element (3) is associated with the multifunctional operator control unit.

## Revendications

1. Dispositif de communication destiné à transmettre des signaux acoustiques dans un véhicule automobile, comprenant au moins deux moyens d'émission et au moins deux moyens de réception destinés à transmettre et rayonner des signaux acoustiques, dans lequel au moins un moyen d'émission et un moyen de réception sont respectivement affectés à une position spatiale, et une unité de commande destinée à activer ou désactiver ledit au moins un moyen d'émission, **caractérisé en ce que**
les niveaux de signal peuvent être détectés au moyen de l'unité de commande (2), au niveau des moyens d'émission et seul le moyen d'émission présentant le niveau de signal le plus élevé est respectivement activé,
dans lequel on affecte à l'unité de commande (2) au moins un élément de commande (3) au moyen duquel le niveau de signal d'au moins un moyen d'émission est pondéré, dans lequel le niveau de signal pondéré est utilisé lors de la détermination du niveau de signal le plus élevé, dans lequel au moins un moyen d'émission peut être désactivé sélectivement au moyen de l'élément de commande indépendamment des niveaux de signaux appliqués.

2. Dispositif de communication selon la revendication 1, **caractérisé en ce qu'**au moins un moyen de réception peut être désactivé indépendamment des niveaux de signaux au moyen de l'élément de commande (3).

3. Dispositif de communication selon l'une quelconque des revendications 1 ou 2, **caractérisé en ce que** les moyens d'émission sont réalisés sous la forme de microphones (11 - 14) et/ou d'un réseau de microphones.

4. Dispositif de communication selon l'une quelconque des revendications 1 à 3, **caractérisé en ce que** les moyens de réception sont réalisés sous la forme de hautparleurs (7 - 10).

5. Dispositif de communication selon l'une quelconque des revendications 1 à 4, **caractérisé en ce que** le moyen de réception respectif affecté du moyen d'émission actif peut être désactivé par l'unité de commande (2) ou peut être soumis à une réduction de niveau.

6. Dispositif de communication selon l'une quelconque des revendications précédentes, **caractérisé en ce que** des éléments à retard destinés à compenser la différence de temps de propagation sont disposés entre les moyens d'émission et les moyens de réception.

7. Dispositif de communication selon l'une quelconque des revendications précédentes, **caractérisé en ce que** des compensateurs d'écho sont disposés entre les moyens d'émission et de réception.

8. Dispositif de communication selon l'une quelconque des revendications précédentes, **caractérisé en ce que** des unités d'atténuation sont disposées entre les moyens d'émission et de réception.

9. Dispositif de communication selon l'une quelconque des revendications précédentes, **caractérisé en ce que** l'élément de commande (3) est réalisé sous la forme de touches, de commutateurs et/ou d'actionneurs rotatifs à poussoirs.

10. Dispositif de communication selon l'une quelconque des revendications précédentes, **caractérisé en ce que** la position des moyens d'émission et de réception peut être représentée sur une unité de commande multifonction, l'élément de commande (3) étant affecté à l'unité de commande multifonction.
